Europäisches Patentamt

European Patent Office

Office européen des brevets

(19)

(11) Publication number: **0 121 714**
A2

# (12) EUROPEAN PATENT APPLICATION

(21) Application number: **84101990.4**

(22) Date of filing: **25.02.84**

(51) Int. Cl.³: **G 01 J 3/28**

(30) Priority: **03.03.83 US 471659**

(43) Date of publication of application: **17.10.84**
**Bulletin 84/42**

(84) Designated Contracting States: **CH DE FR GB LI**

(71) Applicant: **KOLLMORGEN CORPORATION,**
**66 Gatehouse Road, Stamford Connecticut 06902 (US)**

(72) Inventor: **Kishner, Stanley J., 5 Mohawk Lane, Pomona,**
**NY 10970 (US)**

(74) Representative: **Königseder, Claudia,**
**Zugspitzstrasse 65, D-8104 Grainau (DE)**

(54) **Automatic wavelength calibration correction system.**

(57) A system for maintaining the wavelength scale calibration of diffraction grating based spectrometers and monochromators is disclosed. The system utilizes the approximately fixed angular relationship between diffracted and undiffracted light emanating from the diffraction grating to maintain the calibration of an instrument. One or more photodetectors are used to measure shifts in an undiffracted image due to mechanical misalignments that cause errors in the instrument's wavelength scale. Once direction and degree of shift known, the instrument is recalibrated either by adjusting various mechanical and/or optical structures within the instrument to shift the undiffracted images by an amount equal to, but in a direction opposite the measured shift so that the diffracted light is likeweise shifted, or by relabeling the wavelength scale outputs by an amount derived from the measured shift.

490-033

AUTOMATIC WAVELENGTH CALIBRATION
CORRECTION SYSTEM

This invention relates to optical instruments, and more particularly to systems in spectrometers and monochromators for maintaining them in correct wavelength calibration over long periods of time.

A spectrometer is an optical instrument used to measure the spectral content of light. In making a spectral measurement the spectrometer first divides or separates the light into its component wavelengths, and then measures the intensity of the light at one or more wavelengths, or narrow wavelength bands, simultaneously or sequentially.

A monochromator is a modified spectrometer which isolates a single wavelength, or narrow wavelength band, at a time for measurement.

Generally, optical instruments such as spectrometers or monochromators use a diffraction grating or a prism to separate light into its component wavelengths. When a diffraction grating is used, light incident upon the grating is separated into its component wavelengths by the process of diffraction, i.e., the diffraction grating deflects the various wavelengths comprising the light through different angles. The resulting angular separation of the wavelengths is then converted into spatial separation by a focusing mirror or lens to allow corresponding spatially separated photoelectric devices to measure the intensity of light at the various wavelengths.

To maintain the wavelength calibration of a given instrument using a diffraction grating, it is important to preserve the accuracy of the angular relationship between the various optical and mechanical structures of the instrument. Often,

however, such structures become misaligned because of shifts or deformations caused by thermal variations, long term relief ("creep") of mechanical stresses built up during the machining process or other similar effects. The result is a loss of calibration due to mechanical misalignments that cause output errors in the instrument's wavelength scale.

Wavelength errors in such instruments are normally corrected by adjusting the instrument while it is illuminated with a light source having a known narrow spectral "line" (e.g., lasers and certain gas discharge lamps). Since the wavelength of the emitted line is known, the spectrometer or monochromator can be aligned by mechanically adjusting its optical and/or mechanical structures so that the line follows the correct path through the optical system. Such an adjustment may require a shift in the wavelength scale itself.

For laboratory instrumentation, this calibration approach is normally acceptable because the periodic "down time" can be tolerated. However, for spectrometers or monochromators used in industrial applications, such periodic calibration is rather burdensome, and highly undesirable because of the loss of production time and its related expense. In addition, adverse conditions which often exist in the production environment (e.g., heat and vibration) serve to aggravate the causes of misalignment, resulting in a need for more frequent calibration. Further, the location of the instrument in, and/or the environmental conditions of a production area often hamper calibration efforts so as to extend the necessary down time. Thus, it can be seen that there is a need for a system which can automatically maintain spectrometers and monochromators in proper calibration.

A primary object of the present invention is to provide a system that can automatically maintain spectrometers and monochromators in proper calibration.

Another object of the present invention is to provide a system that can automatically maintain spectrometers and monochromators in proper calibration by mechanically adjusting an instrument's various mechanical and/or optical structures.

A further object of the present invention is to provide a system that can automatically maintain spectrometers and monochromators in correct calibration by relabeling an instrument's wavelength scale outputs in response to shifts and/or deformations in the instrument's various optical and/or mechanical structures.

These and other objects are achieved according to the invention by a system for maintaining the wavelenth scale calibration of a spectrometer or monochromator utilizing a diffraction grating to disperse light entering the spectrometer or monochromator into its component wavelengths, characterized in that it comprises means for measuring the magnitude and direction of shift occurring in the position of an undiffracted image of the entering light's entry point emanating from the diffraction grating; and means for correcting the calibration of the wavelength scale utilizing said measured shift.

The present invention is directed towards a system and a method for keeping the wavelength scales of diffraction grating based spectrometers and monochromators correctly calibrated. One or more photodetectors measure the direction and degree of error in the output of an instrument's wavelength scale due to mechanical misalignment by measuring the direction and degree of shift in the position of undiffracted light that is reflected or transmitted by the instrument's diffraction grating. Since this undiffracted light retains an approximately fixed angular relationship with respect to the diffracted light emanating from the diffraction grating, the instrument can be realigned either by automatically adjusting its various optical and/or mechanical structures accordingly, or by relabeling the wavelength values of its wavelength scale outputs in response to the shift in position of the undiffracted light.

Fig. 1 is a diagram of the angular relationship between incident, undiffracted and diffracted beams of light for a reflection grating.

Figs. 2A-2C are block diagrams of an embodiment of the invention in a spectrometer utilizing a reflection grating.

Fig. 3 is a block diagram of an embodiment of the invention in a monochromator utilizing a reflection grating.

Fig. 4 is a block diagram of an embodiment of the invention in a spectrometer utilizing a transmission grating.

A diffraction grating is used to diffract light into its component wavelengths, yet it does not diffract all of the light incident upon it. In the case of a reflection diffraction grating, a portion of the light is diffracted so as to be reflected at various angles, depending upon wavelength, while a portion of the light is undiffracted so as to be reflected from the grating like from a mirror. This undiffracted, reflected light retains an approximately fixed angular relationship with respect to the diffracted light. Thus, if the angle at which the diffracted light is reflected changes for whatever reason, the angle at which the undiffracted light is reflected will change by a corresponding amount.

As noted previously, effects such as thermal variations and long term "creep" can cause shifts, deformations and the like (hereinafter called deformations) in the various optical and mechanical structures of instruments such as spectrometers and monochromators, which can result in output errors in their wavelength scales.

Such deformations can occur either after or before or at an instrument's diffraction grating. When errors occur because of deformations after an instrument's diffraction grating, the angular relationship between the undiffracted light beam and the diffracetd light beams emanating from the grating remains constant. This constant angular relationship between the two kinds of beams can be used to correct wavelength scale errors by correcting misalignments in the position of the undiffracted light beams. Since the undiffracted light beam is always reflected as from a mirror, the degree of shift in its position can easily be measured. Once this information is known, it can be used to correct any misalignment in the position of the instrument's diffracted beams because degree and direction of their misalignment will always be the same as the degree and direction of misalignment of the undiffracted beam.

When errors occur in an instrument's wavelength scale because of deformations that occur before or at the instrument's diffraction grating, the angular relationship between the undiffracted beam and the diffracted beams of light is no longer strictly constant, and thus, further analysis is required for correction.

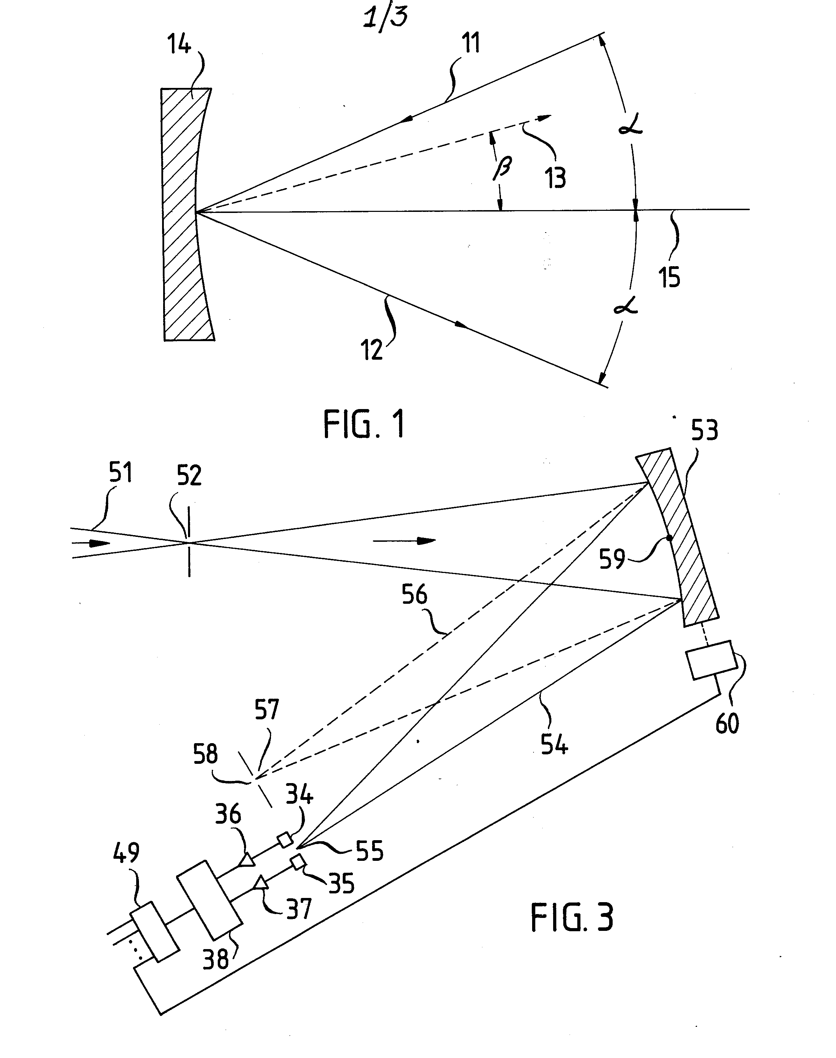

Fig. 1 shows the angular relationship between incident 11, undiffracted 12 and diffracted 13 light beams for a concave reflection grating 14. The angle of incidence of the incident beam 11 is arbitrarily shown to be $\alpha$. Thus, the undiffracted beam 12 is reflected at the same angle $\alpha$ on the other side of a normal 15.

The diffracted beam 13 is reflected at an angle $\beta$ which corresponds to some arbitrary wavelength $\lambda$. The angular relationship among the various beams is as follows:

$$a(\sin \alpha + \sin \beta) = k \lambda \qquad (1)$$

where a = distance between successive grating grooves (mm)

$\lambda$ = wavelength (nm)

$\alpha$ = angle of incidence

$\beta$ = angle of diffraction

k = diffraction order (0, $\pm 1$, $\pm 2$, ...)

The undiffracted light beam 12 corresponds to k = 0 (zero order), and appears at an angle $-\alpha$ with respect to the normal 15. The diffracted light beam 13 usually occurs in the first order (k = 1), so that

$$\sin \beta = \frac{\lambda}{a} - \sin \alpha \qquad (2)$$

In the following analysis it is assumed that the changes in $\alpha$ and $\beta$ that can lead to wavelength scale misalignment will be small. This is realistic because it is reasonable to assume that proper mechanical and thermal design will ensure that large mechanical deformations will not take place, such that only residual, small deformations not completely accounted for in the design need be compensated for in practical instrumentation.

A mechanical deformation at either the grating or any instrument element before the grating will affect the angle of incidence $\alpha$. If the angle of diffraction $\beta$ is changed by an amount $\Delta\beta$ for a small angular change $\Delta\alpha$ in the angle of incidence $\alpha$, then

$$\Delta\beta = \frac{\partial\beta}{\partial\alpha}\,\Delta\alpha \qquad (3)$$

The differential, $\partial\beta/\partial\alpha$, is found from equation (2) to be

$$\frac{\partial\beta}{\partial\alpha} = \frac{-\cos\alpha}{\cos\beta} \qquad (4)$$

Then, substituting into equation (3), we get

$$\Delta\beta = -\Delta\alpha\frac{\cos\alpha}{\cos\beta} \qquad (5)$$

Equation (5) indicates that the angular correction $\Delta\beta$ to be applied to the diffracted light is proportional to the angular error in $\Delta\alpha$. The proportionality constant depends on $\alpha$ and $\beta$, both of which are known. Thus, if the angular error in the undiffracted light $\Delta\alpha$ can be measured, it can be used to calculate via equation (5) the error $\Delta$ in the wavelength scale. Here, however, the proportionality constant is not necessarily equal to unity. Since $\beta$ is wavelength dependent, the proportionality constant $\cos\alpha/\cos\beta$ is also wavelength dependent.

Thus, correction for errors is a non-linear function of wavelength when deformations occur before or at the grating so as to cause errors to occur in $\alpha$, while correction is the same for all wavelengths when deformations occur after the grating.

In analyzing which method of correction is proper for alignment purposes, it is first necessary to determine whether the cause of an error lies either before or at or after the diffraction grating. In practice, of course, the cause of the misalignment is unknown. Therefore, an approximate approach can be formulated based on a given measured change in the spatial position of the undiffracted beam of light. It should be noted, however, that the optical design of the spectrometer or monochromator can have an effect on the accuracy of this approximation. The spatial error $\Delta x$ in the wavelength scale occurring for the diffracted light beam is found by multiplying the angular error $\Delta \beta$ by the focal length F of the diffraction grating 14. From equation (5):

$$\Delta x = F \Delta \beta = -F \Delta \alpha \frac{\cos \alpha}{\cos \beta} \qquad (6)$$

But $-F \Delta \alpha$ is the spatial displacement of the undiffracted light beam which, if measured, would allow error correction. Calling this $\Delta x_0$, then

$$\Delta x = \Delta x_0 \frac{\cos \alpha}{\cos \beta} \qquad (7)$$

For errors occurring after the grating, however, the spatial error in the wavelength scale is equal to the spatial error in the location of the undiffracted image. Then,

$$\Delta x = \Delta x_0 \qquad (8)$$

Comparing equations (7) and (8), it can be seen that the ratio $\cos \alpha / \cos \beta$ distinguishes the cases of angular errors induced before or at the grating (7) and those induced after the grating (8). The approximation consists of ignoring the term $\cos \alpha / \cos \beta$.

Spatial coordinates of the wavelength scale bear a one-to-one correspondence to wavelength values. Usually, the wavelength scale is linear, so that the spatial coordinates in the wavelength scale can be converted to wavelength units by multiplying by a known constant. In monochromator or spectrometer designs for which the wavelength scale is non-linear, conversion to wavelength can be achieved through the use of an equation, or via a look-up table. The appropriate relationship can be determined theoretically, or measuring the physical position of the diffracted image as a function of input wavelength.

Equations (7) and (8) are equivalent for the Littrow configuration, $\beta = \alpha$, so that $\cos \alpha/\cos \beta = 1$, and $\Delta x = \Delta x_o$. This occurs, of course, for only one wavelength. For the general case, the accuracy of the method will depend on the choice of the angles $\alpha$ and $\beta$. The angle $\alpha$ can be controlled by adjusting the orientation of the diffraction grating 14 with respect to the entrance slit of the optical instrument, while $\beta$ can be controlled by changing the grating constant (i.e., the number of grooves per millimeter) of the grating. The optimal choice is a Littrow configuration with the spread of $\beta$ kept to a minimum. For example, if the angle of incidence is $\alpha = 20°$ and $\beta$ varies from $15°$ to $25°$, at the two extremes:

$$\frac{\cos \alpha}{\cos \beta} = \frac{\cos 20°}{\cos 15°} = 1,0279$$

$$\frac{\cos \alpha}{\cos \beta} = \frac{\cos 20°}{\cos 25°} = 0,9645$$

Then, if equation (8) is used for correcting wavelength errors, the correction, in the case of errors that affect the angle $\alpha$, will be off by 2,79% and 3,55% at the two extremes of the wavelength band. These are small errors, since the wavelength errors themselves are assumed to be small. Thus, it appears that the difference between errors caused by deformations before or at the grating and errors caused by deformations after the grating is not large enough to significantly differentiate the two cases. It can be concluded that, as a practical approach, the procedure and proportionality constant used to correct wavelength scale errors due to deformations after the grating should also be used for errors due to deformations before or at the grating since the errors, even at the extremes of the wavelength band, are small.

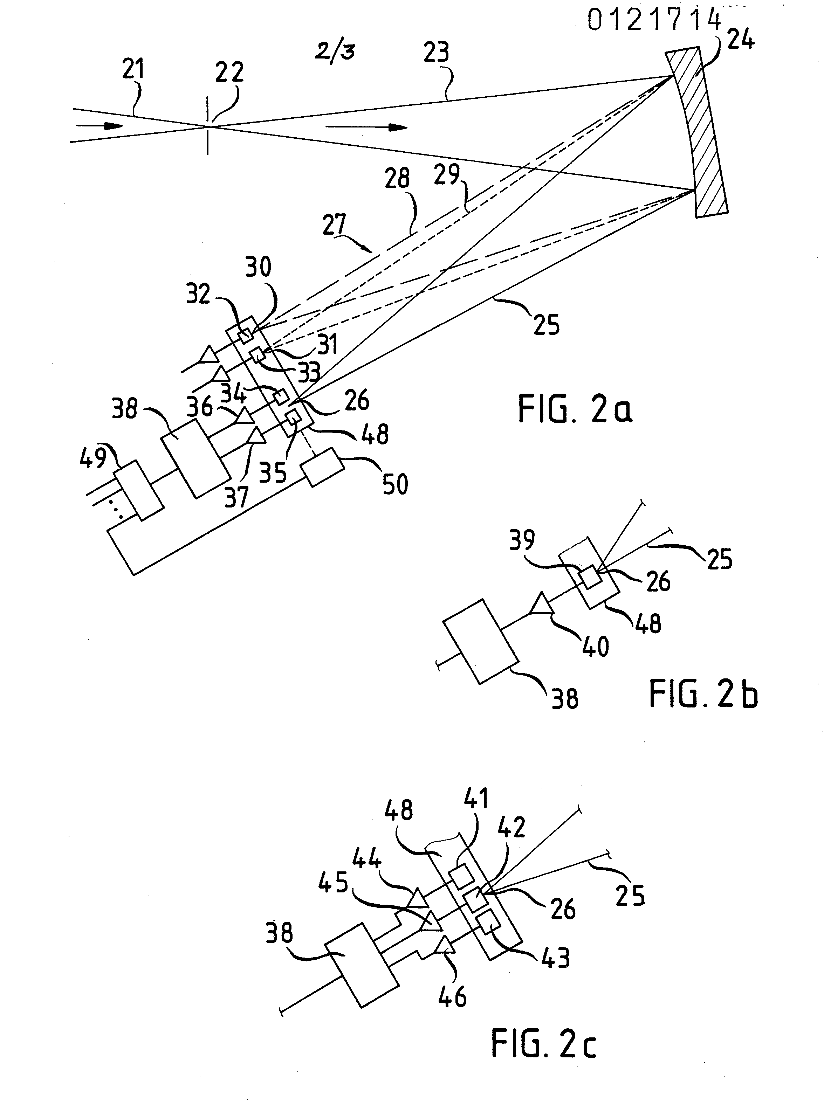

Fig. 2A shows the optical diagram of a spectrometer utilizing a reflection grating and a block diagram of one embodiment of the invention for correcting errors in the spectrometer's wavelength scale.

The light 21 to be analyzed by the spectrometer is incident upon an entrance slit 22. A portion 23 of light 21 passes through the entrance slit, after which it diverges until it impinges on a concave diffraction grating 24. After light 23 impinges upon the diffraction grating 24, the majority of it is diffracted so as to emanate from the grating at various angles; however, a portion 25 of the light is reflected from grating 24 as from a mirror. Reflected or undiffracted light 25, depicted by solid lines, is reflected from the diffraction grating 24 at an angle of reflection which is equal to its angle of incidence upon grating 24. This undiffracted light is focused by the grating at a point 26 which represents a direct image, or zero order diffracted image of entrance slit 22. This image is composed of a broad range of wavelengths.

Diffracted light 26 is reflected from the diffraction grating 24 at various angles, depending upon the wavelength of the diffracted light. Figure 2A shows light beams for two arbitrary wavelengths, $\lambda_1$ and $\lambda_2$, depicted by dashed lines 28 and dotted lines 29, respectively. These diffracted rays are focused by the diffraction grating at points 30 and 31, respectively, which represent images of entrance slit 22 at wavelengths $\lambda_1$ and $\lambda_2$, respectively.

The spectrometer has two photodetectors 32 and 33 placed at points 30 and 31, respectively, for sensing the intensity of light at wavelengths $\lambda_1$ and $\lambda_2$, respectively. Where light intensity is to be sensed at a multiplicity of wavelengths, an array of photodetectors, or a vidicon detector or the like can be used.

To correct errors in the wavelength scale of the spectrometer (e.g., the intensity measurements taken by photodetectors 32 and 33 at certain wavelengths), the spatial displacement of image 26 is measured. For this purpose, the embodiment of the invention shown in Fig. 2A uses a pair of photodetectors 34 and 35 straddling image point 26, such that it falls midway between the two detectors, causing an equal amount of undiffracted light to fall on both photodetectors when the instrument is properly aligned. The outputs of these photodetectors are, in turn, connected to amplifiers 36 and 37 which, in turn, are connected to a microcomputer 38 using to interpret this information. Thus, should the position of the zero order image 26 move within the plane of the diagram because of the occurrence of any deformations, the two photodetectors 34 and 35 will not receive an equal amount of light. Rather, the ratio of the output of detector 34 to the output of detector 35 will increase as the zero order image 26 moves toward detector 34, and will decrease as it moves away. Thus, the system can be initially calibrated so that there is a unique relationship between the ratio of the photodetector outputs and the correct position of image 26.

Changes in this initial detector output ratio represent shifts in the spatial position of image 26, and as noted previously, are used to correct errors in the wavelength scale of the spectrometer. By using equation (8), the spatial error in the wavelength scale is set equal to the measured spatial error in the position of the undiffracted image 26. The corresponding wavelength error is found by converting spatial error into wavelength error, via a known linear or non-linear equation or from a look-up table.

Motion of the image in the orthogonal direction will reduce the intensity of light on the photodetectors, but will not affect the wavelength scale. It is reasonable to assume that movements of the image will be small, so that slight variations in energy throughput will not be nearly as detrimental to performance as errors in the wavelength scale.

In an alternative embodiment of the invention, shown in Fig. 2B, sensing of the position of the zero order image 26 can be done by a single photodetector 39 connected to microcomputer 38 through a single amplifier 40. Here, the photodetector 39 is positioned such that approximately half of the photodetector is illuminated by image 26 when the optical system is properly aligned. If a misalignment occurs, the signal generated in the single photodetector 39 will increase if the image moves toward the center of the photodetector, or decrease if the image moves away from the center of the photodetector. Although this arrangement is more economical to implement, it is less desirable than the use of a pair of photodetectors, since it depends on measurement of an absolute signal level of the photodetector, while the utilization of two photodetectors depends on the ratio of the photodetector outputs. Absolute measurements are more difficult to acquire, especially over long periods of time, and are affected by such parameters as the brightness of the light to be analyzed, the spectral responsivity of the photodetector (which may be temperature-dependent), and the accumulation of dust and dirt on optical surfaces. The use of a ratio of signal from two photodetectors is less sensitive to these parameters, and will, therefore, provide a more accurate measurement of the displacement of the zero order image 26 from its nominal position.

In yet another alternative embodiment of the invention shown in Fig. 2C, sensing of the position of the zero order image 26 can be done by a series of three (or more) photodetectors 41, 42 and 43 disposed in a straight line and connected to microcomputer 38 through amplifiers 44, 45 and 46, respectively. The detectors should be closely spaced, and of such a size that light from the image 26 is incident upon all detectors. Then, ratios of detector outputs, such as the ratios of the outputs of detectors 42 and 43 to the output of detector 42, can be used to sense shifts in the position of image 26. Although this arrangement will improve the accuracy of the present invention for most applications, the improvement in accuracy and corresponding increase in complexity may be warranted only in certain cases.

In the present invention, photodetectors 34 and 35 are mechanically mounted on the same plate 48 used to mount photodetectors 32 and 33. This arrangement is used to achieve a constant positional relationship between the two sets of photodetectors.

The manner in which the present invention corrects wavelength scale errors is the same whether an error is caused by deformations before, at or after the diffraction grating. This approach results in an adequate degree of accuracy because the spread of ß is kept small, thereby keeping the degree of error introduced at a minimum. Thus, the operation of the present invention for a typical misalignment situation is as follows:

If, for example, the mechanical structure that mounts all the photodetectors, moves relative to the rest of the spectrometer, then images 26, 30 and 31 will all be misaligned by the same amount. However, using the outputs of detectors 34 and 35, microcomputer 38 provides an indication as to the amount that image 26 is misaligned. Since the relative positions of photodetectors 34 and 35 are fixed with respect to photodetectors 32 and 33, and since there is a sufficiently constant angular relationship between beam 25 and beams 28 and 29, determining the amount of misalignment in image 26 will also determine the amount by which the diffracted images 30 and 31 are misaligned. Errors in the wavelength scale are then easily corrected by either translating the photodetector mounting plate 48 the necessary amount to correct the misalignment, or by relabeling the wavelengths sensed by photodetectors 32 and 33 accordingly. Relabeling is achieved by adding a fixed correction to all wavelengths, the wavelength correction being derived  from the measured spatial error in the position of the undiffracted image. In either case, the degree of correction necessary is calculated by a logic circuit such as microcomputer 38. If the former method of correction is used, microcomputer 38 achieves a typical electromechanical positioning circuit 49 to drive a typical mechanical positioning apparatus 50 so as to properly position plate 48.

It should be noted that circuit 49 is also provided with additional outputs for driving other mechanical positioning apparatus to position the other optical and mechanical structures of the spectrometer, if necessary, for error correction.

The present invention can also be used with spectrometers having optical configurations other than that shown in Fig. 2A. For example, a spectrometer could use a plane diffraction grating which would require additional optical elements (e.g., lenses or concave mirrors) between entrance slit 22 and diffraction grating 24 and the diffraction grating and photodetectors 32 and 33 to achieve the necessary focusing requirement by the instrument. However, the use of these additional elements increases the likelihood of a mechanical misalignment that will affect the accuracy of the spectrometer's wavelength scale. Thus, in the preferred embodiment an optical arrangement which includes a concave diffraction grating is used. This arrangement also allows the diffracted and undiffracted images to be positioned close to each other for optimum system performance.

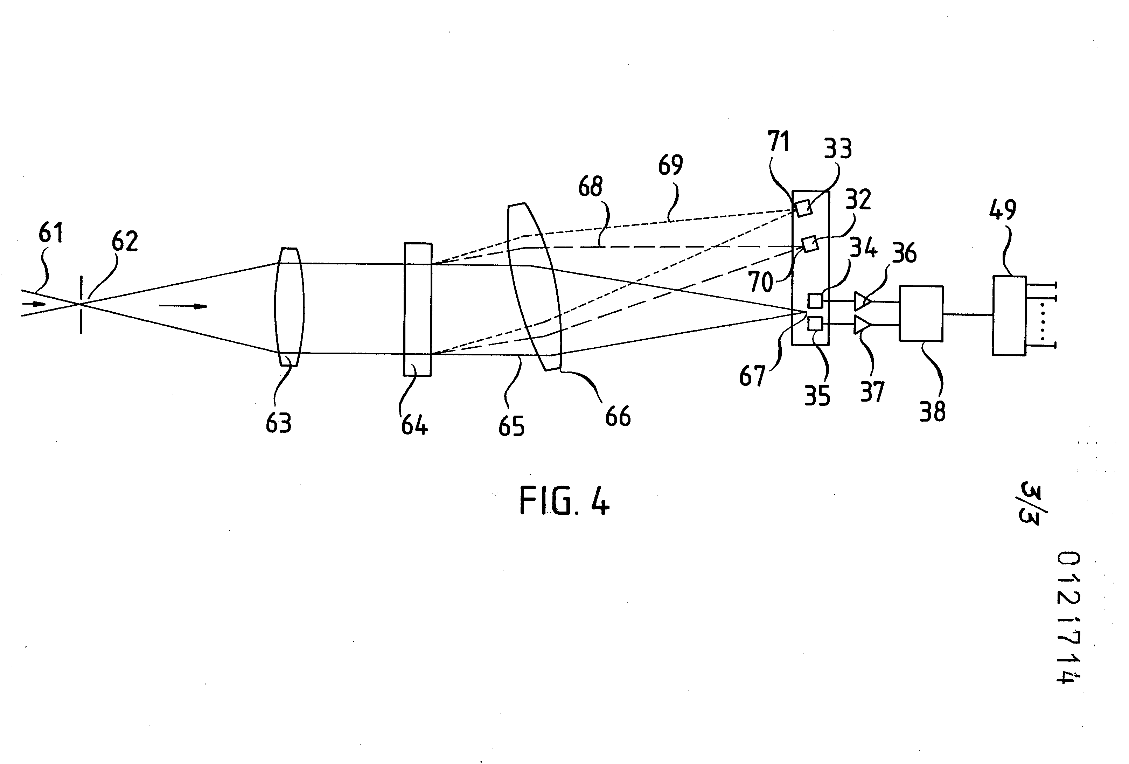

Fig. 3 shows a block diagram of the present invention being used with a typical monochromator. Here, light 51, which is incident upon an entrance slit 52 thereof, diverges to a concave diffraction grating 53 within the monochromator. Grating 53 focuses undiffracted light 54, depicted by solid lines, to a point 55, and diffracted light 56, depicted by dashed lines, to a point 57. Point 55, which is the zero order image, is located between adjacent photodetectors 34 and 35 which, as noted previously, are connected to microcomputer 38 through amplifiers 36 and 37, respectively.

The diffracted image 57 passes through an exit slit 58. The wavelength of this diffracted image is determined by the angular orientation of grating 53. Thus, rotation of the grating about an axis 59, shown normal to the surface of the diagram, will result in angular rotations of the undiffracted and diffracted beams 54 and 56, and variation of the wavelength of the light beam present at exit slit 58.

When the angular position of grating 53 is such that the undiffracted image 55 is properly centered between detectors 34 and 35, and their electrical output signals are equal, there is only one wavelength, called the calibration wavelength, that should appear at exit slit 58. This wavelength can be determined in a one-time wavelength calibration of the monochromator. From that time on, the calibration wavelength can be expected to appear at the exit slit 58 whenever the zero order image 55 is properly centered. If the grating 53 is rotated on its axis to the angle at which the calibration wavelength is expected to appear at exit slit 58, and the zero order image 55 is not properly centered as determined from the outputs of detectors 34 and 35, then an error in the wavelength scale has occurred. Once this information is passed through amplifiers 36 and 37 to microcomputer 38, it uses this information to realign the monochromator. If reassignment of the wavelength of the diffracted light is used, it is performed in the same manner as for spectrometers. If mechanical correction is used, it is easily achieved by microcomputer 38 rotating grating 53 about axis 59 through a typical electromechanical drive circuit 60 which is mechanically coupled to grating 53.

If a plane diffraction grating is to be used with the monochromator, additional mirrors or lenses would be required as in the case of the previously described spectrometer. Nevertheless, even with such additional optical elements, the wavelength error correction method would still remain the same.

Fig. 4 shows the present invention as it is used with a spectrometer utilizing a transmission diffraction grating. Here, incident light 61 passes through an entrance slit 62 and diverges to a lens 63, which collimates the light and directs it toward a transmission grating 64. Undiffracted light 65, depicted by solid lines, passes straight through the grating 64, after which it is focused by a lens 66 to a point 67. Point 67 is located midway between adjacent photodetectors 34 and 35. Diffracted light at wavelengths $\lambda_1$ and $\lambda_2$, depicted by dashed lines 68 and dotted lines 69, respectively, are imaged to points 70 and 71. Beams 68 and 69 are sensed by photodetectors 32 and 33. Compensation of wavelength errors is achieved in the identical fashion as described for a spectrometer using a reflection diffraction grating.

The above described embodiments of the invention are illustrative, and modifications thereof may occur to those skilled in the art. The invention is not limited to the embodiments disclosed herein, but is to be limited only as defined by the appended claims.

CLAIMS:

1. A system for maintaining the wavelength scale calibration of a spectrometer or monochromator utilizing a diffraction grating to disperse light entering the spectrometer or monochromator into its component wavelengths, characterized in that it comprises means for measuring the magnitude and direction of shift occurring in the position of an undiffracted image of the entering light's entry point emanating from the diffraction grating; and means for correcting the calibration of the wavelength scale utilizing said measured shift.

2. The system as claimed in claim 1 wherein said correcting means comprises means for adjusting the mechanical and/or optical structures of the instrument to shift said undiffracted image position by an amount equal to, but in a direction opposite said measured shift so that diffracted images of said entry point emanating from the diffraction grating are likewise shifted and, thereby, the wavelength scale calibrated.

3. The system as claimed in claim 1 wherein said correcting means comprises means for relabeling the wavelength scale outputs by an amount derived from said measured shift so that the wavelength scale is recalibrated.

4. The system as claimed in claim 2 wherein said adjusting means comprises a plurality of computer controlled electromechanical apparatuses for translating and/or rotating said mechanical and/or optical structures.

5. The system as claimed in claim 3 wherein said relabeling means comprises a computer connected to the wavelength scale.

6.      The system as claimed in any of claims 2 to 5 wherein said measuring means comprises a plurality of photodetectors connected to said correcting means and disposed so that said undiffracted image falls in the center thereof when the wavelength scale is properly calibrated.

7.      The system as claimed in claim 6 wherein said measuring means comprises two photodetectors disposed so that said undiffracted image impinges on each of said two photodetectors with equal intensity when said wavelength scale is properly calibrated.

8.      The system as claimed in any of claims 2 to 5 wherein said measuring means comprises a photodetector connected to said correcting means and disposed so that said undiffracted image impinges on one side of said photodetector when said wavelength scale is properly calibrated.

9.      A system for maintaining the wavelength scale calibration of a spectrometer or monochromator utilizing a diffraction grating to disperse light entering the spectrometer or monochromator into its component wavelengths, characterized in that it comprises means for sensing a shift in the position of an undiffracted image of the entering light's entry point emanating from the diffraction grating; means for determining the magnitude and direction of said undiffracted image position shift; and correcting means for either relabeling the wavelength scale outputs by an amount derived from said measured shift so that the wavelength scale is recalibrated, or adjusting the mechanical and/or optical structures of the spectrometer or monochromator to shift said undiffracted image position by an amount equal to, but in a direction opposite said measured shift so that diffracted images of said entry point emanating from the diffraction grating are likewise shifted and, thereby, the wavelength scale recalibrated.

10.      The system as claimed in claim 9 wherein said sensing. means comprises a plurality of photodetectors disposed so that said undiffracted image falls in the center thereof when the wavelength scale is properly calibrated.

11.      The system as claimed in claim 10 wherein said sensing means comprises two photodetectors disposed so that said undiffracted image impinges on each of said two photodetectors with equal intensity when said wavelength scale is properly calibrated.

12.      The system as claimed in claim 10 wherein said sensing means comprises a photodetector disposed so that said undiffracted image impinges on one side of said photodetector when said wavelength scale is properly calibrated.

13.      The system as claimed in claim 11 or 12 wherein said correcting means comprises a computer connected to at least one electromechanical apparatus for translating and/ or rotating said mechanical and/or optical structures, and to the wavelength scale.

14.      The system as claimed in claim 13 wherein said determining means is said computer.

15.      A system for maintaining the wavelength scale calibration of a spectrometer or monochromator utilizing a diffraction grating to disperse light entering the spectrometer or monochromator into its component wavelengths, characterized in that it comprises at least one photodetector for sensing a shift in the position of an undiffracted image of the entering light's entry point emanating from the diffraction grating; at least one electromechanical apparatus for translating and/or rotating the mechanical and/or optical structures of the instrument; and a logic circuit capable of determining the magnitude and direction of shift occurring in said position of said undiffracted image, and of either relabeling the wavelength scale outputs by an amount derived from said measured shift so that the wavelength scale is recalibrated, or activating said at least one electromechanical apparatus to translate and/or rotate said mechanical and/or optical structures to shift said undiffracted image by an amount equal to, but in a direction opposite said determined shift so that diffracted images of said entry point emanating from the diffraction grating are likewise shifted and, thereby, the wavelength scale recalibrated.

16.    The system as claimed in claim 15 wherein two photodetectors sense a shift in said undiffracted image, said image impinging with equal intensity on each of said two photodetectors when said wavelength scale is properly calibrated.

17.    The system as claimed in claim 15 wherein one photodetector senses a shift in said undiffracted image, said image impinging on one side of said photodetector when said wavelength scale is properly calibrated.

18.    The system as claimed in claims 16 or 17 wherein said logic circuit is a microcomputer.

19·    A method for maintaining the wavelength scale calibration of a spectrometer or monochromator utilizing a diffraction grating to diperse light entering the spectrometer or monochromator into its component wavelengths, characterized in that said method comprises the steps of measuring the magnitude and direction of shift occurring in the position of an undiffracted image of the entering light's entry point emanating from the diffraction grating; and either shifting said image position by an amount equal to, but in a direction opposite said measured shift so that diffracted images of said entry point emanating from the diffraction grating are likewise shifted and, thereby, the wavelength scale recalibrated, or relabeling the outputs of the wavelength scale by an amount derived from said measured shift so that the wavelength scale is recalibrated.

20. A method of maintaining the wavelength scale calibration of a spectrometer or monochromator utilizing a diffraction grating to disperse light entering the spectrometer or monochromator into its component wavelengths, characterized in that said method comprises the steps of measuring the magnitude and direction of shift occurring in the position of an undiffracted image of the entering light's entry point emanating from the diffraction grating; and shifting said image position by an amount equal to, but in a direction opposite said measured shift so that diffracted images of said entry point emanating from the diffraction grating are likewise shifted and, thereby, the wavelength scale recalibrated.

21. A method of maintaining the wavelength scale calibration of a spectrometer or monochromator utilizing a diffraction grating to disperse light entering the spectrometer or monochromator into its component wavelengths in proper calibration, characterized in that said method comprises the steps of measuring the magnitude and direction of shift occurring in the position of an undiffracted image of the entering light's entry point emanating from the diffraction grating; and relabeling the outputs of the wavelength scale by an amount derived from said measured shift so that the wavelength scale is recalibrated.

22. The method as claimed in any of claims 19 to 21 wherein said magnitude and direction of shift are measured by sensing a change in the ratio of the intensity of said undiffracted image impinging on one side of said image's focal position when said wavelength scale is properly calibrated, to the intensity of said undiffracted image impinging on the other side of said focal position.

23. The method as claimed in any of claims 19 to 21 wherein said magnitude and direction of shift are measured by sensing absolute changes in the intensity of said undiffracted image.

24. The method ss claimed in claims 19 or 20 wherein said image position is shifted by adjusting mechanical and/or optical structures of said spectrometer or monochromator.

25. The method as claimed in claims 19 or 21 wherein said relabeling is accomplished by a logic circuit.

FIG. 1

FIG. 3

FIG. 2a

FIG. 2b

FIG. 2c

FIG. 4

0121714